# EUROPEAN PATENT APPLICATION

(11) **EP 4 794 148 A1**
(43) Date of publication of application: **19.08.2026**
(21) Application number: 25167905.6
(22) Date of filing: 02.04.2025
(51) Int. Cl.: H02H 3/02, H01H 33/59, H02H 3/087, H02J 3/36

(54) **HVDC CIRCUIT BREAKER ARRANGEMENT**

(30) Priority: 18.02.2025 IN 202541013799
(71) Applicant: Hitachi Energy Ltd, 8050 Zürich (CH)
(72) Inventor: KANNAN, Vinothkumar, 600128 CHENNAI (IN); HAFNER, Ying-Jiang, 771 42 Ludvika (SE); COTTET, Didier, 8050 Zurich (CH)
(74) Representative: AWA Sweden AB

(57) **Abstract**

There is disclosed herein an HVDC, circuit breaker arrangement (1) for an HVDC system (100) comprising a transmission line (4) connected to a converter station (2). The HVDC circuit breaker arrangement comprises a serial arrangement (10) of a first current limiting device (14), an HVDC circuit breaker (12) and a second current limiting device (16). The first current limiting device and the second current limiting device are arranged on different sides of the HVDC circuit breaker in said serial arrangement. The HVDC circuit breaker arrangement is configured to be connected in series along the transmission line of the HVDC system. The first and second current limiting devices are configured to limit a rise in current in the HVDC circuit breaker upon occurrence of a fault in the HVDC system. The present disclosure further relates to an HVDC system.

## Description

### Technical field

The present disclosure relates to a high voltage direct current (HVDC) circuit breaker arrangement for an HVDC system. The present disclosure further relates to an HVDC system.

### Background

High voltage direct current (HVDC) transmission lines are experiencing significant growth worldwide due to their efficiency and reliability in transmitting electricity over long distances. Unlike traditional alternating current (AC) systems, HVDC transmission lines minimize energy losses, making them ideal for connecting remote renewable energy sources, such as offshore wind farms, to the shore and the power grid.

To interrupt the current when a fault occurs in an HVDC transmission, HVDC circuit breakers have been developed and designed to handle the high voltages and currents of the HVDC grid. An HVDC grid is generally constituted of more than two converter stations connected on a common DC transmission line. The HVDC circuit breakers use specialized technology, such as mechanical breakers, semiconductor-based systems, or hybrid designs, to rapidly isolate faults in the HVDC transmission line. By quickly disconnecting faulty sections, HVDC circuit breakers protect the grid from instability, enable the safe restoration of power and prevent damage to any equipment connected to the grid.

A challenge for the HVDC circuit breakers is the rapid current rise that occurs when a fault along the HVDC transmission line happens. HVDC circuit breakers are limited by their current rating and the time required to detect the fault and thereafter to open the circuit. The fault current increases over time and with a rapid current rise there is a risk that the fault current rises above the current rating of the HVDC circuit breaker, resulting in failure and increased fault energy to be absorbed, resulting in increasing the cost of HVDC circuit breaker. To solve this problem a current limiting device has been introduced. The current limiting device is connected in series with the HVDC circuit breaker, thereby introducing inductance to the transmission line, which limits the rate of change of the current and limits the fault energy absorption which results in reducing the cost of HVDC circuit breaker.

However, the existing solutions are limited to some types of faults while for other faults the current limiting device will not provide any current limitation. Therefore, there is a need for improved HVDC circuit breaker arrangements that are capable of handling a wider range of fault conditions.

### Summary

It is therefore an object of the present disclosure to provide a high voltage direct current (HVDC) circuit breaker arrangement for an HVDC system, that alleviates at least part of the above-mentioned drawbacks. It is for example an object of the present disclosure to provide an HVDC circuit breaker that provides a limit to a rate of current rise for a wider range of fault conditions. Further, it is an object of the present disclosure to provide a solution for preventing the fault current from rising above the maximum allowed current of the HVDC circuit breaker before the HVDC circuit breaker is able to open the circuit. A further object of the present disclosure is to provide a high voltage direct current (HVDC) grid system.

According to a first aspect of the present disclosure, an HVDC circuit breaker arrangement for an HVDC system is provided. The HVDC system comprises a transmission line connected to a converter station and/or a DC busbar. The HVDC circuit breaker arrangement comprises a serial arrangement of a first current limiting device, an HVDC circuit breaker and a second current limiting device. The first current limiting device and the second current limiting device are arranged on different sides of the HVDC circuit breaker in the serial arrangement. The circuit breaker arrangement is configured to be connected in series along the transmission line of the HVDC system or connected to the DC busbar. The first and second current limiting devices are configured to limit a rise in current in the HVDC circuit breaker upon occurrence of a fault.

According to a second aspect of the present disclosure, an HVDC, system is provided. The HVDC system comprises a converter station, a transmission line connected to the converter station, and an HVDC circuit breaker arrangement according to the first aspect.

Conventionally, a current limiting device has been positioned in series with an HVDC circuit breaker along a transmission line to limit the rate of the current rise. However, with this design the current limiting device only limits the rate of the current rise when a fault occurs outside of the HVDC circuit breaker arrangement on the transmission line, i.e., when a fault occurs outside the serial arrangement. A fault within the serial arrangement, i.e., between the current limiting device and the HVDC circuit breaker would result in that the current limiting device is electrically isolated from the HVDC circuit breaker and the current limiting device would not provide any limitation of the rate of current rise. This risks that the current rises above the predefined maximum current, i.e., a maximum allowed current in the HVDC system. By providing a first current limiting device at a first side of the HVDC circuit breaker and a second current limiting device at a different side, for example opposite side, or either side, of the HVDC circuit breaker in the serial arrangement, at least one of the current limiting devices will always limit the rate of the current rise even if the fault is generated between one of the first and second current limiting device and the HVDC circuit breaker. As all components of the HVDC circuit breaker arrangement are connected in series along the transmission line, the embodiments according the first aspect provide the benefit that faults generated outside of the serial arrangement and faults generated within the serial arrangement can be handled. In other words, any fault generated along the transmission line can be handled. The rate of the current rise should be understood as the slope of the current over time, for example expressed as dl/dt wherein I is the current and t is time.

As a further consequence, as compared to the conventional system where only one current limiting device is used, two current limiting devices of a reduced size are used in the embodiments according to the first aspect, which facilitates the transportation and the handling of the HVDC circuit breaker arrangement.

The first and second current limiting devices are configured to limit the current rise in the HVDC circuit breaker. The first and the second current limiting devices are positioned in proximity to the HVDC circuit breaker and together the first and second current limiting devices and the HVDC circuit breaker form an HVDC circuit breaker arrangement. That the HVDC circuit breaker and the first and second current limiting devices are connected in a serial arrangement does not limit the serial arrangement from having further devices connected in the serial arrangement. In the serial arrangement, the devices are arranged in the following order, the first current limiting device, the HVDC circuit breaker, and the second current limiting device. In other words, the HVDC circuit breaker acts as the intermediate element in the serial arrangement. This means that the current during normal operation will flow first through the first current limiting device, thereafter through the HVDC circuit breaker and at last through the second current limiting device, or the other way around, depending on the current direction.

The HVDC circuit breaker arrangement may be configured to be connected in series along the transmission line of the HVDC system, such that the HVDC circuit breaker is able to open the circuit of the transmission line to stop current flow along the transmission line, to mitigate a fault and also for normal circuit disconnection for maintenance or for other reasons. The HVDC circuit breaker may be configured to break the connection to isolate a DC fault section upon detection of a fault along the transmission line. The fault may for example be a ground fault. The DC fault section may for example be the transmission line such that the transmission line is isolated from the converter station. The transmission line may for example be an HVDC cable or an overhead line or a mix of cable and overhead line.

The HVDC circuit breaker arrangement may also be configured to be connected in series to a DC busbar in a DC switchyard. The DC busbar may be seen as a central node where multiple connections can be made to efficiently route electricity within the switchyard. This type of connection may for example be common when multiple transmission lines are connected to a common DC busbar.

If the goal is to disconnect the transmission line from the converter station in case of a fault on the transmission line, the circuit breaker arrangement may be placed in series with the transmission line before the transmission line connects to the DC busbar. If the goal is to isolate a faulty part of the switchyard or an outgoing/incoming connection, the circuit breaker arrangement may be connected to the DC busbar such that the faulty part of the switchyard can be disconnected. The HVDC circuit breaker arrangement may, for example, be connected in series with the DC busbar or branch off from the busbar such that the HVDC circuit breaker arrangement connects to the busbar.

The HVDC circuit breaker may be any type of HVDC circuit breaker such as a hybrid HVDC circuit breaker (HHCB), a DC circuit breaker (DCCB), or a fault sectionalizing device (FSD).

High voltage, HV, typically refers to voltages exceeding voltage level for residential and/or commercial use, each of which depend on region of use. As a non-limiting example, the International Electrotechnical Commission, IEC, typically considers AC voltages of 1000 V or more and DC voltages of 1500 V or more to be high voltage. The HVDC system may comprise a plurality of converter stations with transmission lines each having an HVDC circuit breaker arrangement connected along a transmission line to protect a respective converter station (i.e., a converter station connected to the HVDC system via this transmission line).

The current limiting device may be a current limiting reactor such as an air core reactor, or a ferrite core reactor. The current limiting device may also be a superconducting fault current limiter, for example providing DC breaking by combining a superconducting fault current limiter with a circuit breaker.

The first current limiting device may have a first inductance, and the second current limiting device may have a second inductance. The first inductance and the second inductance may together provide at least an inductance required for limiting, at least until the HVDC circuit breaker is activated for interrupting current flow through the HVDC circuit breaker, a fault current originating from a fault outside the serial arrangement to be below the predefined maximum current.

The inductance provided by both the first and second current limiting devices can be designed to limit a fault current such that it does not exceed the predefined maximum current at least until the HVDC circuit breaker is activated and current flow is interrupted. The inductance required may be determined based on parameters in the HVDC system. A theoretical rise of current in the transmission line when a fault occurs may be calculated and the installed HVDC system has a maximum current that can be allowed to flow in the HVDC system. Further, there will be a period before the HVDC circuit breaker will be activated and current flow is interrupted. This period may include at least one of a time required to identify the fault, a time to locate the fault, a time to determine which HVDC circuit breaker in the HVDC system that should be activated, and a time for the HVDC circuit breaker to interrupt current flow through the HVDC circuit breaker. During this period, the current will keep rising due to the propagation of the fault. In other words, as long as the HVDC circuit breaker is closed, the current flowing through the HVDC circuit breaker will keep rising due to the propagation of the fault.

The period will depend on where the fault occurs. The HVDC circuit breaker may be designed with different current ratings, but the cost increases for HVDC circuit breakers with higher current ratings. However, the rise of current in the system may be controlled through the size of the total inductance provided by both of the first and second current limiting devices. Therefore, the respective sizes of the first and second inductances may be determined such that it is ensured that the HVDC circuit breaker is able to interrupt current flow before the fault current exceeds the predefined maximum current. If a large rise in current is expected or if a long period is expected, a larger total inductance is required.

Each of the first inductance and the second inductance may be equal to, or greater than, half of said at least an inductance required for limiting, at least until the HVDC circuit breaker is activated for interrupting current flow through the HVDC circuit breaker, a fault current originating from a fault outside the serial arrangement to be below the predefined maximum current.

Conventionally, one current limiting device has provided the total inductance required for limiting a fault current by itself. However, when two current limiting devices are used, the total inductance required for limiting the fault current may be divided between the first and second current limiting devices such that each of the first and second current limiting devices provides at least half the total inductance required for limiting the fault current. The first and second current limiting devices may even be designed with a respective inductance such that their total inductance is higher than the total inductance required for limiting the fault current.

The first and second inductances restrict together the rate of rise of current and thereby limiting the fault current such that it does not exceed the predefined maximum current.

Each of the first inductance and the second inductance may limit, at least until the HVDC circuit breaker is activated for interrupting current flow through the HVDC circuit breaker, a fault current originating from a fault generated within the serial arrangement to be below the predefined maximum.

Generally, a fault within the serial arrangement, that is, between the HVDC circuit breaker and one of the first and second current limiting devices, is faster to locate. For such types of faults (i.e., generated within the serial arrangement), the period for detecting the fault and determining which HVDC circuit breaker in the HVDC system to open is reduced. Accordingly, the period required for interrupting the current flow is shorter and the current will not have time to reach such high levels. Such fault currents may therefore be limited by only one of the first and second current limiting devices. If the fault originates at a location between the first current limiting device and the HVDC circuit breaker, the fault current will only flow through the second current limiting device. In this case, only the second current limiting device will provide inductance to limit the current rise. In an opposite scenario (i.e., with a fault generated at a location between the second current limiting device and the HVDC circuit breaker), only the first current limiting device would provide inductance to limit the current rise.

The inventor has realized that, for a fault located between the circuit breaker and a current limiting device, there will be a faster detection of the fault and a faster triggering of the circuit breaker (faster triggering of the circuit breaker opening signal) and each of the first inductance and the second inductance, being designed in regards of a fault outside the serial arrangement as described above, will also be able to individually handle faults within the serial arrangement.

The first inductance and the second inductance may be equal to each other, which facilitates the installation process. The risk for faulty installation is reduced when designing the first and second inductances such that they are equal to each other. If the first and second inductances have the same size it is not relevant on which side of the HVDC circuit breaker each of the first and second current limiting devices is installed.

A total inductance provided by the first current limiting device and the second current limiting device may be at least 50 mH.

The HVDC circuit breaker may be positioned in a building. The first current limiting device and the second current limiting device may be located outside the building.

Positioning the HVDC circuit breaker inside a building may be advantageous as it enhances system reliability, performance, and lifespan of the HVDC circuit breaker, such as for a converter valve hall in a converter station. By arranging the HVDC circuit breaker in a controlled environment such as in a building, protection from adverse weather conditions such as rain, snow, extreme temperatures, and high humidity, which can otherwise degrade equipment over time, is provided. The building also reduces the accumulation of dust, dirt, and corrosive pollutants, ensuring cleaner operating conditions and reducing the need for frequent maintenance. Further, the building may allow for better thermal management, as the environment can be temperature-controlled to prevent overheating or freezing. Maintenance activities may also be easier and safer to perform indoors, as technicians work in a more stable and secure environment. However, the use of a building to protect the HVDC circuit breaker necessitates the use of a wall penetration technology, such as wall bushings, for connection of the HVDC circuit breaker to the transmission line. Such wall bushings are other elements at which the HVDC circuit breaker is connected to the transmission line are often prone to faults, such as ground faults, for example an insulation failure in the bushing. Hence, it is necessary to also handle these faults.

The HVDC circuit breaker may be connected to the first current limiting device and the second current limiting device through respective wall bushings arranged in respective walls of the building.

Wall bushings are insulating devices used to pass high voltage transmission lines through walls while maintaining electrical insulation and mechanical support. Wall bushings are commonly used to allow connections between indoor and outdoor equipment in HVDC systems. However, faults may occur in wall bushings which would result in a fault within the serial arrangement. Therefore, the first and second current limiting devices may be particularly advantageous where the HVDC circuit breaker is located inside a building and wall bushings or other types of wall penetration techniques need to be used.

At least one of the first current limiting device and the second current limiting device may comprise a plurality of devices connected in series. For HVDC systems, the size of a current limiting device is a factor to take into consideration. Therefore, it may be advantageous to provide a current limiting device in modules with devices that are connected in series, such that each module with devices may be more easily transported and installed on their own. This facilitates both the transportation and the installation process.

The HVDC system may further comprise a control unit configured to detect a fault along the transmission line, or within the HVDC circuit breaker arrangement, and to operate the HVDC circuit breaker of the HVDC circuit breaker arrangement to isolate a DC fault section from a remaining part of the HVDC system.

The control unit may be used for detecting and locating a fault, as well as for determining which HVDC circuit breaker in the HVDC system that should be opened. However, in some embodiments the control unit may only process information given from other dedicated devices throughout the HVDC system. An HVDC system may be designed with many converter stations that each is connected to a transmission line through an HVDC circuit breaker arrangement according to the present disclosure.

Effects and features of the second aspect may be largely analogous to those described above in connection with the first aspect. Embodiments mentioned in relation to the first aspect may be at least largely compatible with the second aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular parts of the HVDC circuit breaker arrangement and the HVDC system described herein. It is also to be understood that the terminology used herein is for the purpose of describing particular embodiments only, and it is not intended to be limiting.

### Brief description of the drawings

The above and other aspects of the present disclosure will now be described in more detail, with reference to the appended figures, wherein:
- Fig. 1: schematically shows an overview of an HVDC system.
- Fig. 2: schematically shows an HVDC circuit breaker arrangement.
- Figs. 3A-3B: schematically show different types of faults in a conventional HVDC circuit breaker arrangement.
- Figs. 3C-3E: schematically show different types of faults in an HVDC circuit breaker arrangement.
- Figs. 4: shows the progression of fault current over time in the HVDC circuit breaker.

### Detailed description

The present disclosure is described in the following by way of a number of illustrative examples. It will be appreciated that these examples are provided for illustration and explanation only and are not intended to be limiting on the scope of the disclosure.

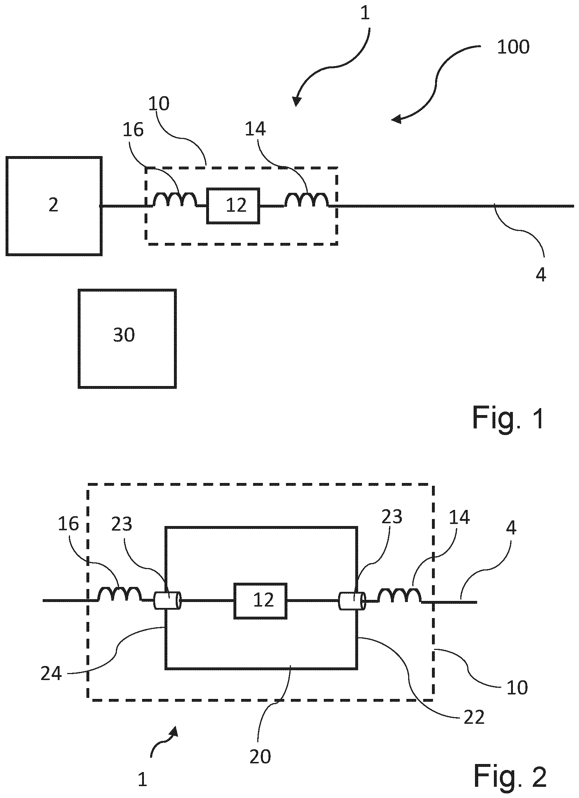

In Fig. 1 a high voltage direct current (HVDC) system 100 is illustrated. The HVDC system 100 comprises a converter station 2, an HVDC circuit breaker arrangement 1 and a transmission line 4. The converter station 2 and the HVDC circuit breaker arrangement 1 are connected in series along the transmission line 4. The HVDC circuit breaker arrangement 1 is able to open the circuit of the transmission line 4 to break the connection to the converter station 2 upon detection of a DC fault, for example along the transmission line 4. The transmission line may for example be an HVDC cable or an overhead line or a mix of cable and overhead line.

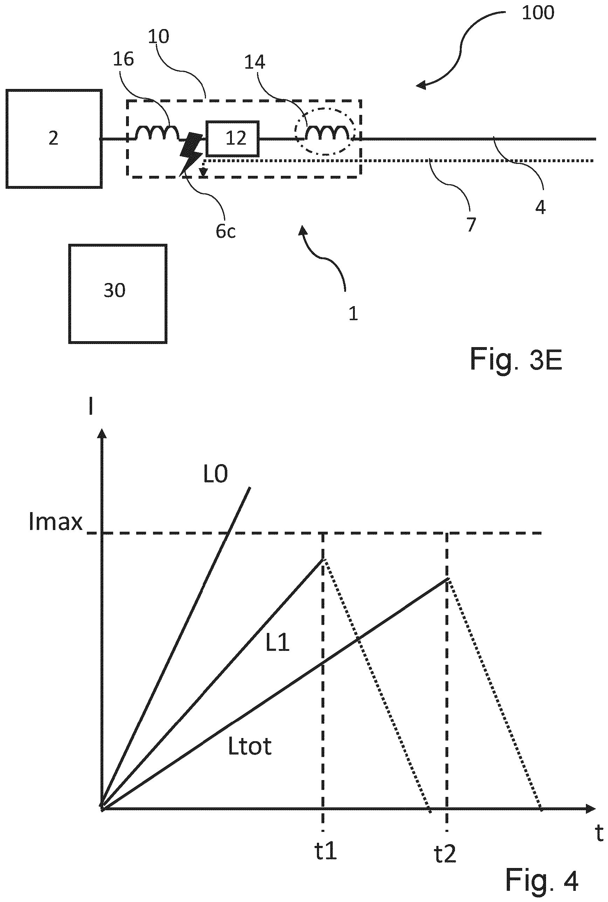

The HVDC circuit breaker arrangement 1 comprises a serial arrangement 10 of a first current limiting device 14, an HVDC circuit breaker 12 and a second current limiting device 16. The first current limiting device 14 and the second current limiting device 16 are arranged on different (opposite) sides of the HVDC circuit breaker 12 in the serial arrangement 10. In other words, the first current limiting device 14 and the second current limiting device 16 are arranged in series with each other and with the HVDC circuit breaker 12, wherein the HVDC circuit breaker 12 is positioned between the first current limiting device 14 and the second current limiting device 16. The devices of the serial arrangement 10 are arranged in the following order: the first current limiting device 14, the HVDC circuit breaker 12, and the second current limiting device 16. The first and second current limiting devices 14, 16 are connected in series so that their inductances add together. Therefore, the inductance of each of the first and second current limiting devices 14, 16 may be smaller than the inductance of a conventional HVDC circuit breaker arrangement in which only one current limiting device is used. The inductances of the first and second current limiting devices 14, 16 will be further discussed in connection to Fig. 4.

The first and second current limiting devices 14, 16 are configured to limit the current rise in the HVDC circuit breaker 12. A current limiting device primarily limits the current rise in its proximity or the part of the HVDC system 100 where the current limiting device is installed. Therefore, the first and the second current limiting devices 14, 16 are positioned in proximity to the HVDC circuit breaker 12. The current rise may be controlled through the design of the first and second current limiting devices 14, 16 and how to design the first and second current limiting devices 14, 16 will be further discussed in connection to Fig. 4.

The HVDC system 100 may further comprise a control unit 30 configured to detect a fault, for example along the transmission line 4 or within the HVDC circuit breaker arrangement 1. The control unit is further configured to operate the HVDC circuit breaker 12 of the HVDC circuit breaker arrangement 1 to break the connection to the converter station 2 for isolating the converter station 2 from a remaining part of the HVDC system 100.

In Fig. 2 a further exemplifying embodiment of the HVDC circuit breaker arrangement 1 is illustrated. In this embodiment, the HVDC circuit breaker 12 is positioned inside a building 20 to provide a more controlled environment for the HVDC circuit breaker 12 with protection from weather conditions such as rain, snow, extreme temperatures, dust, cosmic rays, lightning, and high humidity. The first and second current limiting devices 14, 16 are located outside the building 20. A wall penetration technique, such as the wall bushings 23, is used to pass the transmission line 4 through the building. In other words, the HVDC circuit breaker 12 is connected to the first current limiting device 14 and the second current limiting device 16 through respective wall bushings 23 arranged in respective walls 22, 24 of the building 20. The wall bushings 23 provide an insulated pass-through for the transmission line 4 through the walls 22, 24.

At least one of the first current limiting device 14 and the second current limiting device 16 may comprise a plurality of devices connected in series. For HVDC systems, the total size of a current limiting device is a factor to take into consideration.

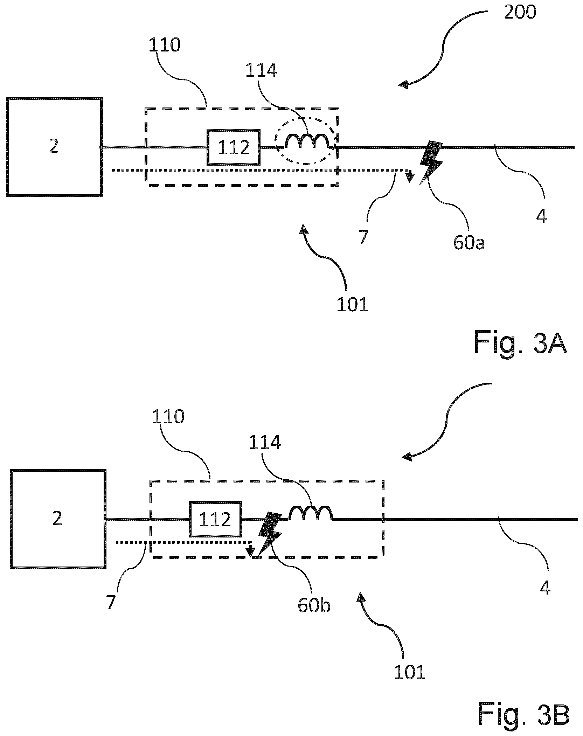

In Figs. 3A and 3B, two different types of faults 60a, 60b are illustrated for an HVDC system 200 using a conventional HVDC circuit breaker arrangement 101. In the conventional HVDC circuit breaker arrangement 101, only one current limiting device 114 is connected in series with an HVDC circuit breaker 112.

In Fig. 3A, the fault 60a is generated or located along the transmission line 4 outside of the HVDC circuit breaker arrangement 101 and in this scenario a fault current 7 will travel through the HVDC circuit breaker 112 and the current limiting device 114. Hence, the current limiting device 114 will be able to limit the rate of the current rise in the HVDC circuit breaker 112. The current limiting device 114 through which the fault current flows is marked with a dotted circle.

In Fig. 3B, the same HVDC circuit breaker arrangement 101 is illustrated. However, in this scenario, the fault 60b is generated or located between the HVDC circuit breaker 112 and the current limiting device 114. Such fault 60b would result in a fault current 7 that does not travel through the current limiting device 114. The current limiting device 114 is electrically isolated from the HVDC circuit breaker 112 by the fault 60b. Hence, the circuit breaker 112 is in this configuration exposed to an increasing fault current which might exceed the maximum current in the circuit breaker and may therefore damage the HVDC circuit breaker 112. This problem is solved by the configurations proposed in the present disclosure.

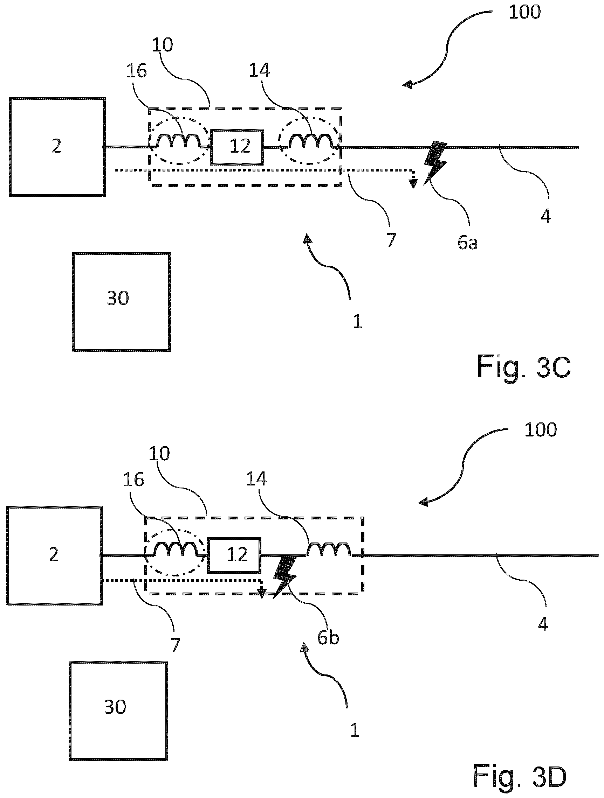

In Figs. 3C to 3E, three different types of faults 6a, 6b, 6c are illustrated for the HVDC system 100 described in connection to Fig. 1. The first and second current limiting devices 14, 16 are configured to limit a rise in current in the HVDC circuit breaker 12 upon occurrence of a fault along the transmission line 4.

In Fig. 3C, the fault 6a corresponds to the same type of fault as the fault 60a, i.e., a fault outside the HVDC circuit breaker arrangement 1. The fault 6a occurs for example along the transmission line 4, which results in that both of the first and second current limiting devices 14, 16 are still connected to the HVDC circuit breaker 12. In this case, the fault current 7 travels through the first and second current limiting devices 14, 16, which is illustrated by the dotted rings This results in that the total inductance from both of the first and second current limiting devices 14, 16 contributes to the current limiting effect. This is the most common fault, and the fault current can be limited by designing the inductances of the first and second current limiting devices 14, 16 and connecting them in series with an HVDC circuit breaker 12.

A fault may also occur between the converter station 2 and the HVDC circuit breaker arrangement 1 (i.e., between the converter station 2 and the second current limiting device 16). If such a fault occurs, the fault current will travel from the opposite side of the circuit breaker arrangement as compared to for the side from which the fault current 7 of the fault 6a originates. As both of the first and second current limiting devices 14, 16 are connected to the HVDC circuit breaker 12, the total inductance from both of the first and second current limiting devices 14, 16 still contribute to the current limiting effect.

In Fig. 3D and E, two scenarios are illustrated, wherein the faults 6b, 6c occur within the serial arrangement, i.e., between one of the first and second current limiting devices 14, 16 and the HVDC circuit breaker 12. In Fig. 3D, the fault 6b is generated or located between the HVDC circuit breaker 12 and the first current limiting device 14. For the scenario with fault 6b, the fault current 7 will only flow through the second current limiting device 16. In Fig. 3E, the fault 6c is located or generated between the HVDC circuit breaker 12 and the second current limiting device 16. For the scenario with fault 6c, the fault current 7 will only flow through the first current limiting device 14. The current limiting device through which the fault current flows is illustrated by a dotted ring.

A reason for the generation of faults between one of the current limiting devices and the circuit breaker is the presence or use of the wall bushings 23. If only the first current limiting device 14 had been used in the scenario with the fault 6b, the first current limiting device 14 would not be able to provide any current limiting effect to the HVDC circuit breaker since the fault 6b electrically isolates the first current limiting device 14 from the HVDC circuit breaker 12. This is the scenario described in connection to Fig 3B. By dividing the current limiting device into the first and second current limiting devices 14, 16, at least one of the first and second current limiting devices 14, 16 provides current limiting effect to the HVDC circuit breaker 12. In Fig. 3D, only the second current limiting device 16 provides a current limiting effect. In Fig. 3E, only the first current limiting device 14 provides a current limiting effect to the HVDC Circuit breaker 12. With the present inventive approach, there is always at least one of the first and second current limiting devices 14, 16 that provides a current limiting effect for protecting the HVDC circuit breaker.

The first and second current limiting devices 14, 16 together or individually limit the rate of the current rise, dl/dt, within the HVDC circuit breaker. This means that the increase of the current over time will be limited. The first and second current limiting devices 14, 16 generate a counter electromotive force when the rate of the current rise, dl/dt, is more than zero. The first current limiting device 14 has a first inductance, and the second current limiting device 16 has a second inductance. The first and second inductances of the first and second current limiting devices 14, 16 provide the current limiting effect.

Fig. 4 shows a graph illustrating the progression of a fault current I over time t, with the x-axis representing time t and the y-axis representing current I in the HVDC circuit breaker 12. The graph illustrates three different curves, a first curve L0 where no inductance is provided for protecting the HVDC circuit breaker 12, i.e., the first and second inductances are zero. The first curve L0 is provided as a reference for an HVDC circuit arrangement without any current limiting device. A second curve L1 illustrates propagation of a fault current in the HVDC circuit breaker 12 when for example the fault 6b described in Fig. 3D occurs. The second curve L1 may also describe the fault 6c described in Fig. 3E. A third curve Ltot illustrates propagation of a fault current in the HVDC circuit breaker 12 when for example the fault 6a described in Fig. 3A or Fig. 3C occurs.

The graph further illustrates a predefined maximum current Imax indicative of a limit of the HVDC system 100, within which the HVDC circuit breaker 12 can handle in safe manner. Further, there is illustrated through a dotted line a first period t1 which indicates a required period for the HVDC circuit breaker 12 to open the circuit of the transmission line 4 when a fault within the HVDC circuit breaker arrangement 10 occurs, i.e., the fault 6b described in Fig. 3D or Fig. 3E. A second dotted line illustrates a second period t2 which indicates a required period for the HVDC circuit breaker 12 to open the circuit of the transmission line 4 when a fault outside the HVDC circuit breaker arrangement 10 occurs, i.e., the fault 6a described in Fig. 3A or Fig. 3C. As can be seen, the first period t1 for interrupting current flow for fault 6b is shorter than the second period t2 for interrupting current flow for fault 6a. This is due to the proximity of the fault 6b which results in shorter time required to detect and locate the fault as well as determining which HVDC circuit breaker to open.

The period for the HVDC circuit breaker 12 to interrupt current flow may include at least one of a time required to identify the fault, a time to locate the fault, a time to determine which HVDC circuit breaker in the HVDC system 100 that should be activated, and a time for the HVDC circuit breaker 12 to interrupt current flow through the HVDC circuit breaker 12. Hence, the period may vary depending on where the fault occurs. During this period, the current will keep rising due to the fault. In other words, as long as the HVDC circuit breaker 12 is closed, the current will keep rising.

As can be seen from the graph, the slope dl/dt of the second curve L1 and the third curve Ltot are different. In the scenario represented by the second curve L1, the fault 6b electrically isolates the first current limiting device 14 and therefore only the second inductance of the second current limiting device 16 provides a current limiting effect. In the third curve Ltot, the fault is outside the HVDC circuit breaker arrangement 1 and therefore both the first and second inductances contributes to the current limiting effect.

In the scenario represented by the third curve Ltot, the first inductance and the second inductance together provide a total inductance sufficient for limiting, at least until the HVDC circuit breaker is activated for interrupting current flow through the HVDC circuit breaker, a fault current originating from the fault 6a outside the serial arrangement to be below the predefined maximum current Imax. The total inductance of the first and second current limiting devices 14, 16 can be designed to limit a fault current such that it does not exceed the predefined maximum current at least until the HVDC circuit breaker 12 is activated and current flow is interrupted. A total inductance required may be determined based on parameters in the HVDC system 100. A theoretical rise of current in the transmission line 4 when a fault occurs may be calculated and the HVDC circuit breaker 12 has the predefined maximum current Imax. Further, an expected period, i.e., the second period t2, required for the HVDC circuit breaker 12 to interrupt current flow may be calculated. With this information, it may be determined how large the first and second inductances should be to avoid that the predefined maximum current Imax is exceeded.

Generally, the first and second current limiting devices are designed such that their combined inductance (i.e., the first inductance and the second inductance) limits a fault current originating from a fault outside the serial arrangement to be below the predefined maximum current at least until the HVDC circuit breaker is activated for interrupting current flow through the HVDC circuit breaker. Further, the first and second current limiting devices are designed such that they individually limit a fault current originating from a fault located within the serial arrangement to be below the predefined maximum current at least until the HVDC circuit breaker is activated for interrupting current flow through the HVDC circuit breaker.

Each of the first inductance and the second inductance may be equal to, or greater than, half of at least a total inductance required for limiting, at least until the HVDC circuit breaker is activated for interrupting current flow through the HVDC circuit breaker, a fault current originating from a fault outside the serial arrangement to be below the predefined maximum current. Through this design it is ensured that the fault current does not exceed the predefined maximum current Imax of the HVDC system. The first inductance and the second inductance may be equal to each other.

In the scenario illustrated by the second curve L1, the fault 6b may have occurred within the serial arrangement 10, as illustrated in Fig. 3D or Fig. 3E. As can be seen, the first period t1 is shorter than the second period t2. This is due to the proximity of the fault 6b, as already mentioned. Further, the slope dl/dt of the line is steeper as the inductance provided by only one of the current limiting devices 14, 16 is lower than the inductance provided by both of the current limiting devices 14, 16.

The shorter first period t1 alleviates the requirements on the first inductance and the second inductance for handling a fault that is generated within the serial arrangement 10.

As mentioned above, the first inductance and the second inductance are designed such that each of the first inductance and the second inductance may limit, at least until the HVDC circuit breaker is activated for interrupting current flow through the HVDC circuit breaker, a fault current originating from a fault located within the serial arrangement to be below the predefined maximum current Imax.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

1. A high voltage direct current, HVDC, circuit breaker arrangement (1) for an HVDC system (100) comprising a transmission line (4) connected to a converter station (2) and/or a DC busbar, the HVDC circuit breaker arrangement comprising:
a serial arrangement (10) of a first current limiting device (14), an HVDC circuit breaker (12) and a second current limiting device (16), wherein the first current limiting device and the second current limiting device are arranged on different sides of the HVDC circuit breaker in said serial arrangement,
wherein the HVDC circuit breaker arrangement is configured to be connected in series along the transmission line of the HVDC system or connected to the DC busbar, and
wherein the first and second current limiting devices are configured to limit a rise in current in the HVDC circuit breaker upon occurrence of a fault in the HVDC system.

2. The HVDC circuit breaker arrangement according to claim 1, wherein the first current limiting device has a first inductance, and the second current limiting device has a second inductance,
wherein the first inductance and the second inductance together provide at least an inductance required for limiting, at least until the HVDC circuit breaker is activated for interrupting current flow through the HVDC circuit breaker, a fault current originating from a fault outside the serial arrangement to be below a predefined maximum current.

3. The HVDC circuit breaker arrangement according to claim 2, wherein each of the first inductance and the second inductance is equal to, or greater than, half of said at least an inductance required for limiting, at least until the HVDC circuit breaker is activated for interrupting current flow through the HVDC circuit breaker, a fault current originating from a fault outside the serial arrangement to be below the predefined maximum current.

4. The HVDC circuit breaker arrangement according to claim 2 or 3, wherein each of the first inductance and the second inductance limits, at least until the HVDC circuit breaker is activated for interrupting current flow through the HVDC circuit breaker, a fault current originating from a fault generated within the serial arrangement to be below the predefined maximum current.

5. The HVDC circuit breaker arrangement according to any one of the preceding claims, wherein the first inductance and the second inductance are equal to each other.

6. The HVDC circuit breaker arrangement according to any one of the preceding claims, wherein a total inductance provided by the first current limiting device and the second current limiting device is at least 50 mH.

7. The HVDC circuit breaker arrangement according to any one of the preceding claims, wherein the HVDC circuit breaker is positioned in a building (20) and wherein the first current limiting device and the second current limiting device are located outside the building.

8. The HVDC circuit breaker arrangement according to claim 7, wherein the HVDC circuit breaker is connected to the first current limiting device and the second current limiting device through respective wall bushings (23) arranged in respective walls (22, 24) of the building.

9. The HVDC circuit breaker arrangement according to any one of the preceding claims, wherein at least one of the first current limiting device and the second current limiting device comprises a plurality of devices connected in series.

10. The HVDC circuit breaker arrangement according to any one of the preceding claims, wherein the HVDC circuit breaker is configured to break the connection to isolate a DC fault section upon detection of a fault in the HVDC system.

11. A high voltage direct current, HVDC, system (100) comprising:
a converter station (2),
a transmission line (4) connected to the converter station and/or a DC busbar, and
an HVDC circuit breaker arrangement (1) according to any one of the preceding claims.

12. The HVDC system according to claim 11, further comprising a control unit (30) configured to:
detect a fault, and
operate the HVDC circuit breaker of the HVDC circuit breaker arrangement to isolate a DC fault section from a remaining part of the HVDC system.
